# EUROPÄISCHE PATENTSCHRIFT

(11) **EP 0 389 742 B1**
(45) Veröffentlichungstag und Bekanntmachung des Hinweises auf die Patenterteilung: **16.03.1994**
(21) Anmeldenummer: 90100620.5
(22) Anmeldetag: 12.01.1990
(51) Int. Cl.: F16G 1/28, F16H 7/02

(54) **Riementrieb bestehend aus einem Zahnriemen und einer Zahnscheibe**
Belt drive with toothed belt and pulley
Transmission à courroie à courroie et poulie crantées

(30) Priorität: 25.03.1989 DE 3909950
(43) Veröffentlichungstag der Anmeldung: 03.10.1990
(73) Patentinhaber: BRECO Kunststoffverarbeitungs-GmbH & Co. KG, D-32457 Porta Westfalica (DE)
(72) Erfinder: Breher, Rudolf, D-4952 Porta Westfalica (DE)

(56) Entgegenhaltungen:
- WO-A-83/01056
- DE-U- 8 903 744
- GB-A- 2 116 289
- GB-A- 2 124 729
- US-A- 2 770 977
- US-A- 3 948 110

## Beschreibung

Die Erfindung bezieht sich auf einen aus einem Zahnriemen und einer Zahnscheibe bestehenden Riementrieb gemäß dem Oberbegriff des Patentanspruchs.

Normalerweise werden Zahnriemen beim Umlauf um eine Zahnscheibe zwischen zwei seitlichen Bordscheiben der Zahnscheibe seitlich geführt. Es gibt aber auch Zahnriementriebe, beispielsweise bei der Anwendung des Zahnriemens als Transportorgan in Transportanlagen, bei denen die Zahnscheibe nicht mit Bordscheiben seitlich über den Zahnriemen vorstehen kann. Hierfür ist z. B. aus der US-PS 2770 977 ein selbstführender Zahnriemen bekannt, bei dem entlang der Mittellinie der gezahnten Riemenseite eine strangförmige Führungsrippe angeordnet ist, die in eine passende Ringnut an der Mitte der gezahnten Umfangsfläche der Zahnscheibe eingreift, oder bei dem umgekehrt die gezahnte Riemenseite durch eine in Riemenlängsrichtung verlaufende Führungsnut in zwei Zahnrippenreihen geteilt ist und in die Nut eine Umfangsrippe der Zahnscheibe eingreift, um dadurch den Zahnriemen auch ohne Bordscheiben auf der Zahnscheibe seitlich zu führen. Nachteilig bei diesem bekannten Zahnriemen ist, daß die strangförmige Führungsrippe des Zahnriemens beim Umlauf um Zahnscheiben auf der Krümmungsinnenseite des Zahnriemens gestaucht werden muß, was trotz der bei dem bekannten Zahnriemen an der Führungsrippe vorgesehenen Einkerbungen die erwünschte weiche Biegbarkeit des Zahnriemens beeinträchtigt und zu einem ungünstigen Laufverhalten des Zahnriemens auf der Zahnscheibe führt. Insbesondere hat der bekannte Zahnriemen den Nachteil, daß durch die strangförmige Führungsrippe oder auch durch die längsverlaufende Führungsnut des Zahnriemens die Kraftübertragungsfläche an den Flanken der Zahnrippen verringert wird, so daß, um die gleiche Antriebsleistung wie ohne die Führungsrippe bzw. ohne die Führungsnut übertragen zu können, der Zahnriemen breiter gemacht werden muß, was den Riemen verteuert und wodurch der Umlauf des Zahnriemens um eine Zahnscheibe auch lauter wird.

Die Erfindung hat zur Aufgabe, für einen Zahnriementrieb der eingangs genannten Art einen Zahnriemen zu schaffen, der sich ohne die Führungsrippe oder die Führungsnut der bekannten selbstführenden Zahnriemen auf einer Zahnscheibe gegen seitliches Ablaufen sichert und somit die Verringerung der Kraftübertragungsfläche durch die Führungsrippe bzw. Führungsnut vermeidet.

Diese Aufgabe wird gemäß der Erfindung in erster Linie durch die Ausbildung des Riementriebes mit den im kennzeichnenden Teil des Patentanspruchs enthaltenen Merkmalen gelöst. Vorteilhafte Ausführungen des erfindungsgemäßen Riementriebes sind Gegenstand der Unteransprüche. Im folgenden werden anhand der Zeichnungen zwei Ausführungsbeispiele für den erfindungsgemäßen Riementrieb näher erläutert. Es zeigt
Figur 1 ein erstes Beispiel der erfindungsgemäßen Ausbildung des Zahnriemens des Riementriebes;
Figur 2 eine vorteilhafte Ausbildung einer zum Zahnriemen der Figur 1 passenden Zahnscheibe des Riementriebes;
Figur 3 ein anderes Ausführungsbeispiel des Zahnriemens des Riementriebes;
Figur 4 ein zu dem Zahnriemen der Figur 3 passendes Ausführungsbeispiel der Zahnscheibe.

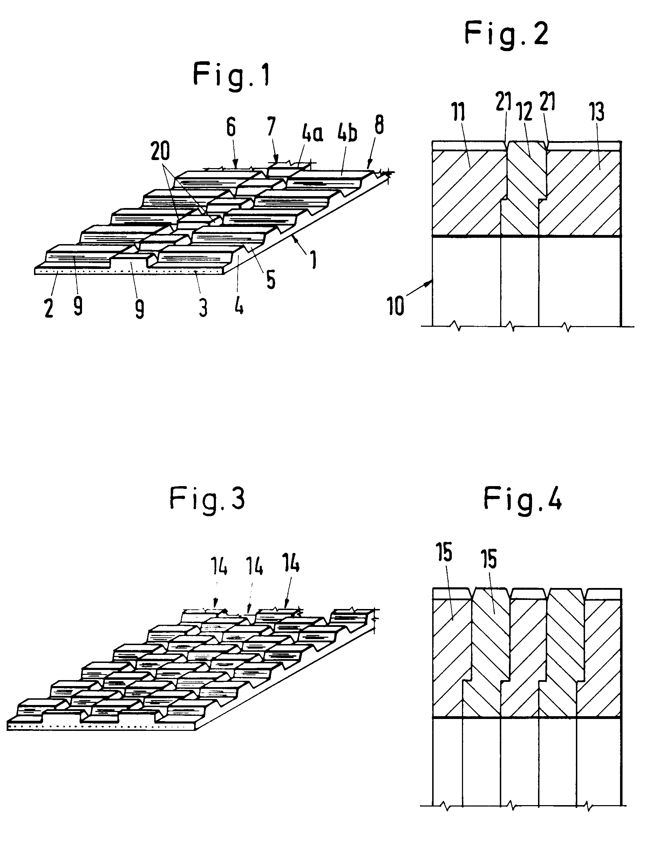

Der in der Figur 1 dargestellte Zahnriemen 1 aus Kunststoff oder dergleichen extrudierbarem Material, in dessen Riemenkörper 2 eine zugfeste Armierungseinlage 3 eingebettet ist, ist mit einer aus Zahnrippen 4 und Zahnnuten 5 bestehenden gezahnten Riemenseite ausgebildet, die bei dem dargestellten Ausführungsbeispiel in drei streifenartig nebeneinander liegende Reihen 6, 7 und 8 von Zahnrippenabschnitten geteilt ist. Während die Zahnrippenabschnitte der beiden seitlichen, breiteren Streifen 6 und 8 in Riemenquerrichtung fluchten, ist die schmalere mittlere Reihe 7 gegenüber den beiden benachbarten Reihen 6 und 8 in Riemenlängsrichtung bzw. in Richtung der Zahnteilung derart versetzt, daß die Zahnrippenabschnitte 4 a der mittleren Reihe 7 wenigstens teilweise seitlich neben den Zahnnuten 5 der beiden seitlichen Reihen 6 und 8 liegen. Gleichartig liegen die Zahnrippenabschnitte 4 b der Reihen 6 und 8 seitlich neben den Zahnnuten der Reihe 7. Vorteilhafterweise sind die Zahnrippenabschnitte 4a um die halbe Zahnteilung gegenüber den Zahnrippenabschnitten 4 b versetzt, so daß die Zahnrippenabschnitte jeweils mit dem vollen Querschnitt seitlich neben den Zahnnuten der benachbarten Reihe liegen. Durch die Aufteilung der Zahnrippen der Riemenverzahnung in gegeneinander versetzte Reihen von Zahnrippenabschnitten wird die Kraftübertragungsfläche der Riemenverzahnung an den Zahnflanken 9 nicht verringert und werden an beiden Enden der Zahnrippenabschnitte 4 a des mittleren Streifens 7 wie auch an den benachbarten Enden der Zahnrippenabschnitte 4 b der seitlichen Streifen 6 und 8 quer zu den Zahnrippen 4 und Zahnnuten 5 der Riemenverzahnung stehende Führungsflächen 20 gebildet, mit denen sich der Zahnriemen selbsttätig auf einer entsprechend ausgebildeten Zahnscheibe führt, so daß die Zahnscheibe keine seitlichen, über den Zahnriemen vorstehende Bordscheiben zum Sichern des Zahnriemens gegen seitliches Ablaufen aufzuweisen braucht. Wie die Figur 1 erkennen läßt, kann der Zahnriemen auch nur zwei gegeneinander versetzte Reihen von Zahnrippenabschnitten aufweisen, um den Zahnriemen mit den aneinander zugekehrten Führungsflächen 20 der beiden Zahnrippenreihen in beiden Seitenrichtungen auf einer entsprechend ausgebildeten Zahnscheibe gegen seitliches Ablaufen zu sichern. Die in Figur 2 dargestellte, zu dem Zahnriemen der Figur 1 passende Zahnscheibe 10 besteht entsprechend der Anzahl der Zahnrippenreihen 6, 7, 8 der Riemenverzahnung aus drei nebeneinander liegenden und miteinander verbundenen Zahnscheibenabschnitten 11, 12, 13 die passend zur Riemenverzahnung gegeneinander verdreht sind, so daß die Führungsflächen 20 zum Beispiel der mittleren Zahnrippenreihe der Riemenverzahnung mit den von den Zahnrippen der beiden seitlichen Zahnscheibenabschnitte gebildeten Anschlagflächen 21 zur Seitenführung des Zahnriemens zusammenwirken.

Bei der Ausbildung des Zahnriemens mit drei oder mehr Reihen von Zahnrippenabschnitten sind vorteilhafterweise die Zahnrippenreihen 6, 7, 8 des Zahnriemens 1 und die Zahnscheibenabschnitte 11, 12, 13 der Zahnscheibe 10 in der Breite derart aufeinander abgestimmt, daß zwischen den für die Seitenführung zusammenwirkenden Führungsflächen 20 an den Zahnriemenzähnen 4 einerseits und den Führungsflächen 21 an den Zahnscheibenzähnen andererseits ein kleiner vorbestimmter Abstand in Riemenquerrichtung besteht. Dadurch wird sichergestellt, daß die Riemenzähne und Zahnscheibenzähne sich nicht an den Führungsflächen 20 und 21 verkeilen, sondern ungehindert so weit ineinandergreifen können, daß sich der Zahnriemen bestimmungsgemäß mit der Kopffläche seiner Zähne oder mit der Grundfläche seiner Zahnlücken auf die korrespondierenden Flächen der Zahnscheibenverzahnung auflegt.

Das in Figur 3 dargestellte Ausführungsbeispiel des Zahnriemens hat fünf schmale Reihen 14 von Zahnrippenabschnitten, von denen jeweils zwei benachbarte Reihen um die halbe Zahnteilung in Riemenlängsrichtung gegeneinander versetzt sind. Vorzugsweise haben die Reihen 14 die gleiche Breite. Dementsprechend besteht die in Figur 4 dargestellte, zu dem Zahnriemen der Figur 3 passende Zahnscheibe aus fünf nebeneinander liegenden und gegeneinander verdrehten Zahnscheibenabschnitten 15. Diese Ausführung des Zahnriemens und der zugehörigen Zahnscheibe hat insbesondere für große Riemenbreiten den zusätzlichen Vorteil, daß beim Umlaufen des Zahnriemens um die Zahnscheibe die Luft besser und ungehinderter aus den jeweils einen Zahn aufnehmenden Zahnnuten entweichen kann und dadurch beim Riemenumlauf um die Zahnscheibe weniger Geräusch entsteht.

## Patentansprüche

1. Riementrieb bestehend aus einem Zahnriemen (1) und einer Zahnscheibe (10), wobei auf der gezahnten Riemenseite entlang einer in Riemenlängsrichtung verlaufenden Linie quer zu den Zahnrippen (4) und Zahnnuten (5) des Zahnriemens (1) stehende Führungsflächen (20) ausgebildet sind, die beim Umlauf des Zahnriemens (1) um die Zahnscheibe (10) zur Seitenführung des Zahnriemens (1) neben entsprechend quer zur Scheibenverzahnung stehenden Anschlagflächen (21) der Zahnscheibe (10) liegen, dadurch gekennzeichnet, daß die Zahnrippen (4) des Zahnriemens (1) in wenigstens zwei streifenartig nebeneinander liegende Reihen (7,8) von Zahnrippenabschnitten (4a, 4b) geteilt sind, die in Riemenlängsrichtung derart gegeneinander versetzt sind, daß die Zahnrippenabschnitte (4a) der einen Reihe (7) wenigstens teilweise seitlich neben den Zahnnuten (5) der benachbarten anderen Reihe (8) liegen, und daß die Zahnscheibe (10) entsprechend der Anzahl der Reihen (6,7,8) von Zahnrippenabschnitten der Riemenverzahnung aus mehreren nebeneinander liegenden Zahnscheibenabschnitten (11,12,13) besteht, die passend zu der Versetzung der Riemenverzahnung gegeneinander verdreht sind.

2. Riementrieb nach Anspruch 1, bei dem der Zahnriemen (1) drei oder mehr Reihen (6,7,8) von Zahnrippenabschnitten aufweist und die Zahnscheibe (10) aus drei oder mehr Zahnscheibenabschnitten (11,12,13) besteht, dadurch gekennzeichnet, daß die Breite der Zahnrippenreihen (6,7,8) des Zahnriemens (1) und die Breite der Zahnscheibenabschnitte (11,12,13) der Zahnscheibe (10) derart aufeinander abgestimmt sind, daß zwischen den bei der Seitenführung zusammenwirkenden Führungsflächen (20) der Zahnriemenzähne (4) und Führungsflächen (21) der Zahnscheibenzähne ein vorbestimmter kleiner Abstand in Riemenquerrichtung besteht.

3. Riemenantrieb nach Anspruch 1 oder 2, dadurch gekennzeichnet, daß die Zahnrippenabschnitte (4a, 4b) zweier benachbarter Reihen (7, 8) um die halbe Zahnteilung gegeneinander versetzt sind.

## Claims

1. Belt drive comprising a toothed belt (1) and pulley (10), wherein guide surfaces (20) positioned transversely to the tooth ribs (4) and tooth grooves (5) of the toothed belt (1) are provided on the toothed side of the belt along a line running in the longitudinal direction of the belt, said guide surfaces (20) lying adjacent to stop faces (21) of the toothed pulley (10) accordingly positioned transversely to the pulley toothing, while the toothed belt (1) is circulating around said toothed pulley (10) to guide the toothed belt (1) laterally, characterised in that said tooth ribs (4) of said toothed belt (1) are separated into at least two strip-like adjacent rows (7, 8) of tooth rib segments (4a, 4b), which are staggered in the longitudinal direction of the belt in such a way that tooth rib segments (4a) of one row (7) lie at least partially laterally adjacent to said tooth grooves (5) of the other adjacent row (8); and that said toothed pulley (10) comprises several adjacent pulley segments (11, 12, 13) corresponding to the number of rows (6, 7, 8) of tooth rib segments of the belt toothing, said pulley segments being offset in relation to one another to match the staggered arrangement of said belt toothing.

2. Belt drive according to Claim 1, wherein the toothed belt (1) is provided with three or more rows (6, 7, 8) of tooth rib segments and the toothed pulley (10) comprises three or more pulley segments (11, 12, 13), characterised in that the width of said rows (6, 7, 8) of tooth ribs of said toothed belt (1) and the width of said pulley segments (11, 12, 13) of said toothed pulley (10) are matched to one another in such a way that there is a predetermined small space in the transverse direction of the belt between the guide surfaces (20) of the toothed belt teeth (4) interacting during lateral guidance and the guide surfaces (21) of the toothed pulley teeth.

3. Belt drive according to Claim 1 or 2, characterised in that the tooth rib segments (4a, 4b) of two adjacent rows (7, 8) are staggered around half the pitch.

## Revendications

1. Commande à courroie se composant d'une courroie dentée (1) et d'une poulie dentée (10), des surfaces de guidage (20) dressées transversalement aux nervures de dent (4) et aux gorges de dent (5) de la courroie dentée (1) se formant sur la face dentée de la courroie le long d'une ligne allant dans le sens longitudinal de la courroie, surfaces qui, pendant la révolution de la courroie dentée (1) autour de la poulie dentée (10) sont disposées, en vue du guidage latéral de la courroie dentée (1), à côté de surfaces de butée (21) de la poulie dentée (10), qui se dressent, de manière correspondante, transversalement par rapport à la denture de la poulie, caractérisée en ce que les nervures de dent (4) de la courroie dentée (1) sont partagées en au moins deux rangées (7, 8) de sections de nervures de dent (4a, 4b) se trouvant l'une à côté de l'autre en forme de bande, sections qui sont décalées entre elles dans le sens longitudinal de la courroie de sorte que les sections de nervures de dent (4a) d'une rangée (7) sont disposées au moins partiellement latéralement à côté des gorges de dent (5) de l'autre rangée voisine (8), et en ce que la poulie dentée (10) se compose, en fonction du nombre de rangées (6, 7, 8) de sections de nervures de dent de la denture de la courroie, de plusieurs sections de poulie dentée (11, 12, 13) se trouvant les unes à côté des autres, qui sont décalées entre elles de manière à coïncider avec le décalage de la denture de la courroie.

2. Commande à courroie selon la revendication 1, dans laquelle la courroie dentée (1) présente trois rangées (6, 7, 8) ou plus de sections de nervures de dent et la poulie dentée (10) se compose de trois sections (11, 12, 13), ou plus, de poulie dentée, caractérisée en ce que la largeur des rangées de nervures de dent (6, 7, 8) de la courroie dentée (1) et la largeur des sections de poulie dentée (11, 12, 13) coïncident entre elles de sorte qu'entre les surfaces de guidage (20) des dents (4) de la courroie dentée, surfaces qui coopèrent pour le guidage latéral, et les surfaces de guidage (21) des dents de la poulie dentée, il existe un petit écartement prédéterminé dans le sens transversal de la courroie.

3. Commande à courroie selon la revendications 1 ou 2, caractérisée en ce que les sections de nervures de dent (4a, 4b) de deux rangées voisines (7, 8) sont décalées entre elles d'un demi-pas de dent.
